# EUROPEAN PATENT SPECIFICATION

(11) **EP 0 310 042 B1**
(45) Date of publication and mention of the grant of the patent: **06.04.1994**
(21) Application number: 88116023.8
(22) Date of filing: 28.09.1988
(51) Int. Cl.: C04B 41/87, C04B 41/89, B23B 27/14

(54) **A1N coated silicon nitride-based cutting tools**
Schneidgerät aus mit Aluminiumnitrid beschichtetem Siliciumnitrid
Outil de coupe à base de nitrure de silicium revêtu de nitrure d'aluminium

(30) Priority: 01.10.1987 US 103333
(43) Date of publication of application: 05.04.1989
(73) Proprietor: Valenite Inc., Dover, Delaware 19901 (US)
(72) Inventor: Sarin, Vinod K., Lexington, MA 02173 (US); D'Angelo, Charles, Sotuborough, MA 01722 (US)
(74) Representative: Grünecker, Kinkeldey, Stockmair & Schwanhäusser Anwaltssozietät

(56) References cited:
- WO-A-85/01474
- CHEMICAL ABSTRACTS, vol. 98, no. 8, 24th February 1983, page 287, abstract no. 58865a, Columbus, Ohio, US; & JP-A-57 145 088 (HITACHI METALS LTD) 07-09-1982
- CHEMICAL ABSTRACTS , vol. 105, no. 2, July 1986, page 279, abstract no. 10818y, Columbus, Ohio, US; && JP-A-61 26 581 (SUMITOMO ELECTRIC INDUSTRIES LTD) 05-02-1986

## Description

This invention relates to cutting tools, cutting tool inserts and wear parts. More particularly, it is concerned with monolithic or composite silicon nitride ceramic articles having an adherent refractory aluminum nitride coating deposited thereon.

Cemented carbide materials are well known for their unique combination of properties of hardness, strength, and wear resistance, and have accordingly found extensive use in mining tool bits, metal cutting and boring tools, metal drawing dies, wear resistant machine parts and the like. It is known that the wear resistance of cemented carbide materials may be enhanced by the application of thin coatings of a highly wear resistant material such as titanium carbide or aluminum oxide. These coated carbide materials are finding increasing commercial utility for certain cutting tool, machining, and wear part applications.

Economic pressures for higher productivity, for example in machining applications, are placing increasing demands upon the performance of such coated materials. To achieve high productivity in machining, a tool must be able to cut at high speeds. At cutting speeds exceeding 457 surface meter per minutes (1500 surface feet per minute (sfpm)), the high temperature strength and chemical inertness of a cutting tool material become increasingly important. The usefulness of cemented carbide cutting tool materials (the predominant material used in cutting tools) has been extended to application requiring cutting speeds of about 457 surface meter per minutes (1500 sfpm) by coating such tools with aluminum oxide. For cutting speeds in excess of 457 surface meter per minutes (1500 sfpm), cemented carbide tools encounter problems associated with coating adherence, loss of strength, and tool nose deformation, which affect dimensional tolerance in the workpiece and contribute to shorter tool life.

Conventional ceramic cutting tools overcome some of these disadvantages but have limitations relating to their lower impact strength and fracture toughness. This is especially true of many alumina-based conventional ceramic cutting tools. Silicon nitride-based ceramic cutting tools have significantly higher impact strength and fracture toughness, but can exhibit lower than desired chemical inertness when employed in cutting long-chipping metals such as steel. Improvements have been made by coating silicon nitride-based ceramic substrates with alumina or with carbides and/or nitrides and/or carbonitrides of titanium, zirconium, hafnium, vanadium, niobium, tantalum, chromium, molybdenum, and tungsten, as disclosed and claimed in U.S. Patents No.s 4,406,667, 4,406,668, 4,406,669, 4,406,670, 4,409,003, 4,409,004, 4,416,670, 4,412,525, 4,412,528, 4,424,066, 4,426,209, 4,431,431, 4,440,547, 4,441,894, and 4,449,989, all commonly owned with the present invention.

In chemical abstracts, Vol. 98, No. 8, Page 287, there are disclosed ceramic cutting tools made from silicon nitride coated with a 0.5 to 5 µm thick aluminum nitride layer and a 1 to 10 µm thick alumina, wherein said intermediate aluminum nitride layer has the function of increasing the adherence of the outer alumina layer.

EP-A-247630, which is a prior art document in the meaning of Article 54 (3) EPC in the United Kingdom, France and Germany only, discloses a material for cutting tools comprising a substrate base on a matrix of silicon nitride having 5 to 50% by wt. Sic-whiskers uniformly dispersed therein and one or more coating layers of aluminum nitride formed on the surface of this substrate in a thichness of 0.3 to 20 µm.

It is an object of the present invention to improve, even further, the adherence and wear resistance of the substrates.

According to the present invention, said object is achieved by a wear resistant coated article comprising a densified composite silicon nitride-based substrate body having an adherent refractory coating layer deposited thereon, wherein said coating layer consists of one or more layers of aluminum nitride and the composite silicon nitride substrate includes , finely divided particles, fibers or whiskers of a hard refractory material uniformly distributed in a densified silicon nitride matrix.

Prefered embodiments and further improvements of the present invention are defined in the subclaims.

In the drawings:
Figure 1 is a photomicrograph of a coated article according to the invention;
Figures 2 and 3 are photomicrographs of coated articles according to the prior art and the invention, respectively, following scratch testing; and
Figure 4 is a bar graph illustrating the results of comparative machining tests.

An illustrative coated cutting tool insert according to the present invention comprises a composite silicon nitride substrate including finely divided particles, fibers or whiskers of a hard refractory material uniformly distributed in a densified silicon nitride matrix. By the term hard refractory material is meant the carbides and/or nitrides and/or carbonitrides of titanium, zirconium, hafnium, vanadium, niobium, tantalum, chromium, molybdenum, and tungsten, including combinations and solid solutions thereof. Such substrates are described in detail in U.S. Patent No. 4,388,085, and in European Patent Application Serial No. 87 111 132.4 filed July 31, 1987, both commonly owned with the present application. The particles, fibers, or whiskers of the hard refractory material are uniformly distributed in a matrix of a first phase of silicon nitride grains, and a refractory second phase of silicon nitride and an effective amount of a densification aid such as yttria, zirconia, hafnia, alumina, magnesia, the lanthanide rare earth oxides, and the like, and mixtures thereof.

The average particle size of the hard refractory particulate preferably ranges between about 0.5 micron to about 20 microns. The preferred aspect ratio for the fibers and whiskers is greater than 5; the preferred diameter is 1-5 microns. The carbide and/or nitride and/or carbonitride refractory material contained in the substrate body is about 0-60 volume percent, preferably about 15-50 volume percent, most preferably about 20-40 volume percent of the substrate body. Also suitable as substrates are the silicon nitride materials described in above referenced Patents 4,406,668, 4,409,003, 4,431,431, 4,440,547, and 4,449,989.

In accordance with the principles of the present invention, an adherent coating layer of aluminum nitride is deposited on the substrate body. The aluminum nitride outer coating layer is preferably of a thickness ranging between about 0.1 microns to about 20 microns, preferably between about 1.0 and about 10 microns.

Exemplary methods of making coated cutting tools, tool inserts, and wear parts in accordance with this invention are given below. The methods are to be viewed as illustrative and are not to be viewed as limiting the scope of the invention as defined by the appended claims. Illustrative methods of preparing the substrate bodies of the invention are described in above referenced Patents 4,431,431 and 4,441,894, and European Application 87 111 132.4. The relevant portions of these patents and application are incorporated herein by reference.

### COATING METHODS

The composite substrate body described above is coated with an adherent aluminum nitride coating layer, said layer being deposited by chemical vapor deposition (CVD) techniques.

Useful characteristics of the CVD method are the purity of the deposited layer and the tendency for some interaction between the layer being deposited and the substrate or intermediate layer during early stages of the deposition process, which leads to further improved layer adherency.

### Deposition of an AlN layer:

An aluminum nitride layer is deposited on the silicon nitride-based substrate of this invention by passing a gaseous mixture of an aluminum halide, a gaseous nitrogen source such as nitrogen or ammonia, and hydrogen over the substrate layer at a temperature of about 800°C-1500°C, preferably at temperatures above about 1000°C. A typical reaction is described by the following equation. (Hydrogen is added to insure that the reaction takes place in a reducing environment.):

2 AlCl₃ + N₂ + 3 H₂ → 2 AlN + 6 HC1 (1)

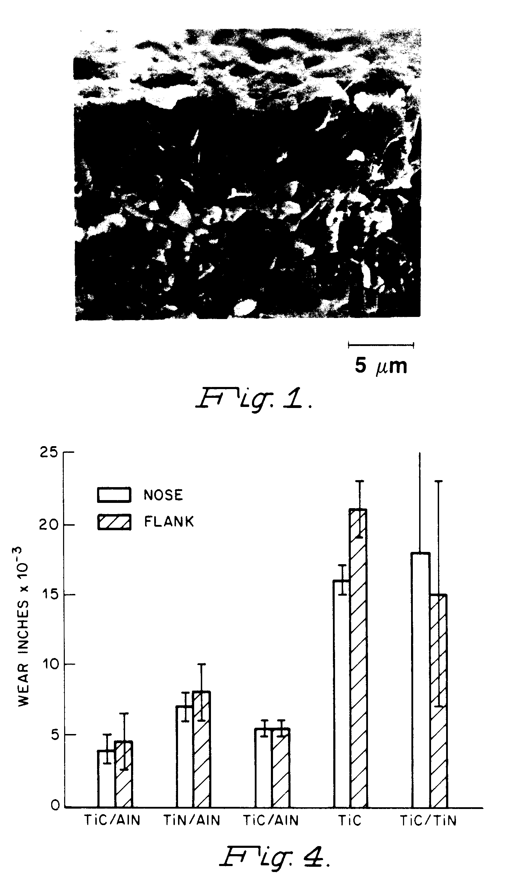

The mixture is passed over the heated substrate until the desired coating thickness is achieved. Routine experimentation is used to determine the rate of coating thickness growth at a particular gaseous flow rate and temperature. Optionally, the AlN coated substrate may be heat treated at 1100°C-1500°C, depending on the substrate material, to further improve adherence through diffusion between the coating and the substrate. This is particularly useful following coating at low temperatures. The AlN coated cutting tool may be used without further coating layers, or may be coated with additional refractory materials as described below. Fig. 1 illustrates an AlN coated article according to the invention, in which the substrate is a sintered silicon nitride.

The following Examples illustrate the advantages provided by the coated substrates, as cutting tools, cutting tool inserts, and wear parts, in accordance with the present invention, having an adherent coating of aluminum nitride alone.

### EXAMPLE 1

### Adherence of AlN, TiC/AlN, and prior art coatings:

As shown in Table I below, various coatings were deposited by the methods described above on silicon nitride-based substrates. The substrates were: (A) Si₃N₄ containing yttria and alumina as sintering aids, (B) composite Si₃N₄ including dispersed TiC particles, and (C) Si₃N₄ containing yttria and magnesia as sintering aids. The coatings deposited were: AlN as grown (AlN), AlN heat treated as described above at 1350°C (AlN(H.T.)), an AlN intermediate layer and a TiC outer layer (TiC/AlN), and as controls a TiC layer alone (TiC), and a titanium nitride intermediate layer and a TiC outer layer (TiC/TiN). Not all coatings were deposited on all substrates. Table I shows the results of scratch tests on the coated substrates to measure coating adherence.

**TABLE I**

| Coating | Adherence on substrate, kg | | |
|---|---|---|---|
| | (A) | (B) | (C) |
| AlN | 6.5 | --- | 9.0 |
| AlN(H.T.) | 14.0 | --- | --- |
| TiC/AlN | --- | --- | 8.5 |
| TiC | <1.0 | 3.0 | 1.0 |
| TiC/TiN | 2.0 | 5.5 | 1.5 |

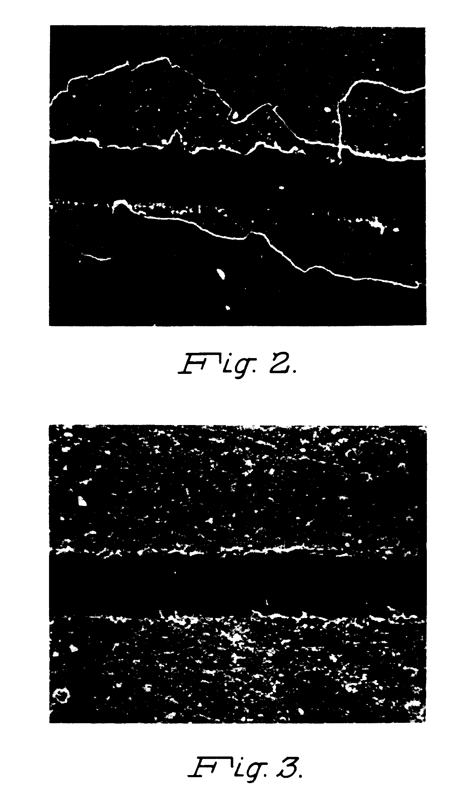

These results illustrate the improved adherence of the AlN coating layer over TiC coatings, including those applied on a substrate having titanium nitride predeposited thereon. Further, improved adherence is shown for TiC deposited over an AlN layer on substrate (C), illustrating the advantage of using AlN as an intermediate adherent layer. The improvement is further illustrated in Figures 2 and 3, which are photomicrographs of coated substrates similar to substrate (C), showing the coating delamination caused by the scratch test on two coatings. Figure 2 illustrates catastrophic failure of a TiC/TiN coating, with extensive flaking off of the coating under a 1.0 kg load. Figure 3 illustrates removal of a TiC/AlN coating only in the path of the scratch tester at 8.5 kg load.

## Claims (Claims for the following Contracting State(s): DE, GB, FR)

1. A wear resistant coated article comprising a densified composite silicon nitride-based substrate body having an adherent refractory coating layer deposited thereon, **characterized in that** said coating layer consists of one or more layers of aluminum nitride and the composite silicon nitride substrate includes finely divided particles, fibers or whiskers of a hard refractory material uniformly distributed in a densified silicon nitride matrix, said whiskers not being SiC-whiskers.

2. The wear resistant coated article of claim 1, wherein the hard refractory material is selected from carbides and/or nitrides and/or carbonitrides of titanium, zirconium, hafnium, vanadium, niobium, tantalum, chromium, molybdenum, and tungsten, including combinations and solid solutions thereof.

3. The wear resistant coated articles of claim 1 or 2, wherein the particles, fibers, or whiskers of the hard refractory material are uniformly distributed in a matrix of a first phase of silicon nitride grains, and a refractory second phase of silicon nitride and an effective amount of a densification aid such as yttria, zirconia, hafnia, alumina, magnesia and the lanthanide rare earth oxides, and mixtures thereof.

4. The wear resistant coated article of any of claims 1 to 3, wherein the average particle size of the hard refractory particulate is between 0.5 µm and 20 µm.

5. The wear resistant coated article of any of claims 1 to 4, wherein the the content of hard refractory material contained in the substrate body is from 15 - 50 vol.-%.

6. The wear resistant coated article of claim 1 wherein the adherent aluminum nitride coating layer is of a thickness between 0.1 µm and 10 µm.

7. A wear resistant coated article consisting of a densified monolithic silicon nitride-based substrate body having an adherent refractory coating layer deposited thereon **chacterized in that** said coating layer consists of one or more layers of aluminum nitride and said silicon nitride-based substrate does not comprise SiC-whiskers.

8. The wear resistant coated article of claim 7, wherein the adherent aluminum nitride coating layer is of a thickness between 0.1 µm and 10 µm.

9. The wear resistant coated article of claim 7 or 8 wherein the adherent aluminum nitride coating layer has been heat treated after deposition at about 1100°C-1500°C and wherein the article exhibits diffusion between the coating and the substrate.

## Claims (Claims for the following Contracting State(s): IT, SE, LI, CH)

1. A wear resistant coated article comprising a densified composite silicon nitride-based substrate body having an adherent refractory coating layer deposited thereon, **characterized in that** said coating layer consists of one or more layers of aluminum nitride and the composite silicon nitride substrate includes finely divided particles, fibers or whiskers of a hard refractory material uniformly distributed in a densified silicon nitride matrix.

2. The wear resistant coated article of claim 1, wherein the hard refractory material is selected from carbides and/or nitrides and/or carbonitrides of titanium, zirconium, hafnium, vanadium, niobium, tantalum, chromium, molybdenum, and tungsten, including combinations and solid solutions thereof.

3. The wear resistant coated articles of claim 1 or 2, wherein the particles, fibers, or whiskers of the hard refractory material are uniformly distributed in a matrix of a first phase of silicon nitride grains, and a refractory second phase of silicon nitride and an effective amount of a densification aid such as yttria, zirconia, hafnia, alumina, magnesia and the lanthanide rare earth oxides, and mixtures thereof.

4. The wear resistant coated article of any of claims 1 to 3, wherein the average particle size of the hard refractory particulate is between 0.5 µm and 20 µm.

5. The wear resistant coated article of any of claims 1 to 4, wherein the the content of hard refractory material contained in the substrate body is from 15 - 50 vol.-%.

6. The wear resistant coated article of claim 1 wherein the adherent aluminum nitride coating layer is of a thickness between 0.1 µm and 10 µm.

7. A wear resistant coated article consisting of a densified monolithic silicon nitride-based substrate body having an adherent refractory coating layer deposited thereon **chacterized in that** said coating layer consists of one or more layers of aluminum nitride.

8. The wear resistant coated article of claim 7, wherein the adherent aluminum nitride coating layer is of a thickness between 0.1 µm and 10 µm.

9. The wear resistant coated article of claim 7 or 8 wherein the adherent aluminum nitride coating layer has been heat treated after deposition at about 1100°C-1500°C and wherein the article exhibits diffusion between the coating and the substrate.

## Patentansprüche (Patentansprüche für folgende(n) Vertragsstaat(en): DE, GB, FR)

1. Verschleißbeständiges, beschichtetes Erzeugnis, umfassend einen verdichteten Siliciumnitridbasis-Verbundsubstratkörper mit einer haftenden, feuerfesten Überzugsschicht, welche auf diesem abgeschieden ist, **dadurch gekennzeichnet**, daß diese Überzugsschicht aus einer oder mehreren Schichten aus Aluminiumnitrid besteht und daß das Siliciumnitrid-Verbundsubstrat fein verteilte Teilchen, Fasern oder Whisker eines harten, feuerfesten Materials gleichförmig in einer verdichteten Siliciumnitridmatrix enthält, wobei diese Whisker keine SiC-Whisker sind.

2. Verschleißbeständiges, beschichtetes Erzeugnis nach Anspruch 1, wobei dieses harte, feuerfeste Material ausgewählt ist aus Carbiden und/oder Nitriden und/oder Carbonnitriden von Titan, Zirkon, Hafnium, Vanadium, Niob, Tantal, Chrom, Molybdän und Wolfram, umfassend Kombinationen und feste Lösungen dieser.

3. Verschleißbeständige, beschichtete Erzeugnisse nach Anspruch 1 oder 2, wobei die Teilchen, Fasern oder Whisker des harten feuerfesten Materials gleichförmig in einer Matrix aus einer ersten Phase aus Siliciumnitridkörnern und einer feuerfesten zweiten Phase aus Siliciumnitrid und einer wirksamen Menge eines Verdichtungsmittels, wie Yttriumoxid, Zirkonoxid, Hafniumoxid, Aluminiumoxid, Magnesiumoxid und Seltene Lanthanerdoxide und deren Mischungen, verteilt sind.

4. Verschleißbeständiges, beschichtetes Erzeugnis nach einem der Ansprüche 1 bis 3, wobei die durchschnittliche Teilchengröße der harten, feuerfesten Teilchen zwischen 0,5 µm und 20 µm liegt.

5. Verschleißbständiges, beschichtetes Erzeugnis nach einem der Ansprüche 1 bis 4, wobei der Gehalt an in dem Substratkörper enthaltenen hartem, feuerfestem Material zwischen 15 bis 50 Vol.-% liegt.

6. Verschleißbeständiges, beschichtetes Erzeugnis nach Anspruch 1, wobei die haftende Aluminiumnitridüberzugsschicht eine Dicke zwischen 0,1 µm und 10 µm aufweist.

7. Verschleißbeständiges, beschichtetes Erzeugnis, bestehend aus einem verdichteten, monolithischen Siliciumnitridbasissubtratkörper mit einer haftenden, feuerfesten Überzugsschicht, welche auf diesem abgeschieden ist, **dadurch gekennzeichnet**, daß diese Überzugsschicht aus einer Schicht oder mehreren schichten aus Aluminiumnitrid besteht und daß das Siliciumnitridbasissubstrat keine SiC-Whisker enthält.

8. Verschleißbeständiges, beschichtetes Erzeugnis nach Anspruch 7, wobei die haftende Aluminiumnitridüberzugsschicht eine Dicke zwischen 0,1 µm und 10 µm aufweist.

9. Verschleißbeständiges, beschichtetes Erzeugnis nach Anspruch 7 oder 8, wobei die haftende Aluminiumnitridüberzugsschicht nach der Abscheidung bei etwa 1100 °C bis 1500 °C wärmebehandelt wurde und wobei das Erzeugnis eine Diffusion zwischen der Beschichtung und dem Substrat zeigt.

## Patentansprüche (Patentansprüche für folgende(n) Vertragsstaat(en): IT, SE, LI, CH)

1. Verschleißbeständiges, beschichtetes Erzeugnis, umfassend einen verdichteten Siliciumnitridbasis-Verbundsubstratkörper mit einer haftenden, feuerfesten Überzugsschicht, welche auf diesem abgeschieden ist, **dadurch gekennzeichnet**, daß diese Überzugsschicht aus einer Schicht oder mehreren Schichten aus Aluminiumnitrid besteht und daß das Siliciumnitrid-Verbundsubstrat fein verteilte Teilchen, Fasern oder Whisker eines harten, feuerfesten Materials enthält, welche gleichmäßig in einer verdichteten Siliciumnitridmatrix verteilt sind.

2. Verschleißbeständiges, beschichtetes Erzeugnis nach Anspruch 1, wobei dieses harte, feuerfeste Material ausgewählt ist aus Carbiden und/oder Nitriden und/oder Carbonnitriden von Titan, Zirkon, Hafnium, Vanadium, Niob, Tantal, Chrom, Molybdän und Wolfram, umfassend Kombinationen und feste Lösungen dieser.

3. Verschleißbeständiges, beschichtetes Erzeugnis nach Anspruch 1 oder 2, wobei die Teilchen, Fasern oder Whisker des harten feuerfesten Materials gleichförmig in einer Matrix aus einer ersten Phase aus Siliciumnitridkörnern und einer feuerfesten zweiten Phase aus Siliciumnitrid und einer wirksamen Menge eines Verdichtungsmittels, wie Yttriumoxid, Zirkonoxid, Hafniumoxid, Aluminiumoxid, Magnesiumoxid und Seltene Lanthanerdoxide und deren Mischungen, verteilt sind.

4. Verschleißbeständiges, beschichtetes Erzeugnis nach einem der Ansprüche 1 bis 3, wobei die durchschnittliche Teilchengröße der harten, feuerfesten Teilchen zwischen 0,5 µm und 20 µm liegt.

5. Verschleißbständiges, beschichtetes Erzeugnis nach einem der Ansprüche 1 bis 4, wobei der Gehalt an in dem Substratkörper enthaltenen hartem, feuerfestem Material zwischen 15 bis 50 Vol.-% liegt.

6. Verschleißbeständiges, beschichtetes Erzeugnis nach Anspruch 1, wobei die haftende Aluminiumnitridüberzugsschicht eine Dicke zwischen 0,1 µm und 10 µm aufweist.

7. Verschleißbeständiges, beschichtetes Erzeugnis, bestehend aus einem verdichteten, monolithischen Siliciumnitridbasissubtratkörper mit einer haftenden, feuerfesten Überzugsschicht, welche auf diesem abgeschieden ist, **dadurch gekennzeichnet**, daß die Überzugsschicht aus einer Schicht oder mehreren Schichten aus Aluminiumnitrid besteht.

8. Verschleißbeständiges, beschichtetes Erzeugnis nach Anspruch 7, wobei die haftende Aluminiumnitridüberzugsschicht eine Dicke zwischen 0,1 µm und 10 µm aufweist.

9. Verschleißbeständiges, beschichtetes Erzeugnis nach Anspruch 7 oder 8, wobei die haftende Aluminiumnitridüberzugsschicht nach der Abscheidung bei etwa 1100 °C bis 1500 °C wärmebehandelt wurde und wobei das Erzeugnis eine Diffusion zwischen der Beschichtung und dem Substrat zeigt.

## Revendications (Revendications pour l'(les) Etat(s) contractant(s) suivant(s): DE, GB, FR)

1. Article revêtu d'un matériau résistant à l'usure comprenant un corps en substrat à base de nitrure de silicium composite densifié sur lequel est déposée une couche d'un revêtement adhérent réfractaire, caractérisé en ce que la dite couche de revêtement comprend une ou plusieurs couche(s) de nitrure d'aluminium et que le substrat de nitrure de silicium composite comprend des particules, fibres ou fils finement divisés d'un matériau réfractaire dur uniformément distribué dans une matrice de nitrure de silicium densifié, les dits fils n'étant pas des fils de SiC.

2. Article revêtu d'un matériau résistant à l'usure selon la revendication 1 dans lequel le matériau réfractaire dur est choisi parmi les carbures et/ou les nitrures et/ou les carbonitrures de titane, de zirconium, d'hafnium, de vanadium, de niobium, de chrome, de molybdène et de tungstène, incluant des combinaisons et des solutions solides de ceux-ci.

3. Article revêtu d'un matériau résistant à l'usure selon la revendication 1 ou 2 dans lequel les particules, fibres ou fils du matériau réfractaire dur sont uniformément distribués dans une matrice d'une première phase de paillettes de nitrure de silicium, et deuxième phase réfractaire de nitrure de silicium et une quantité effective d'un matériau favorisant la densification tel l'yttria, le zircone, l'hafnium, l'alumine, l'oxyde de magnésium et les oxydes de terres rares de lanthanide, et les mélanges de ceux-ci.

4. Article revêtu d'un matériau résistant à l'usure selon l'une quelconque des revendications 1 à 3 dans lequel la taille moyenne des particules du matériau réfractaire dur est comprise entre 0,5 et 20 µm.

5. Article revêtu d'un matériau résistant à l'usure selon l'une quelconque des revendications 1 à 4 dans lequel la quantité du matériau réfractaire dur contenu dans le corps du substrat est comprise entre 15 et 50 % en volume.

6. Article revêtu d'un matériau résistant à l'usure selon la revendication 1 dans lequel la couche du revêtement adhérent de nitrure d'aluminium présente une épaisseur comprise entre 0,1 et 10 µm.

7. Article revêtu d'un matériau résistant à l'usure comprenant un corps en substrat à base de nitrure de silicium monolithique densifié sur lequel est déposée une couche adhérente d'un revêtement réfractaire, caractérisé en ce que la dite couche de revêtement comprend une ou plusieurs couche(s) de nitrure d'aluminium et que le dit substrat à base de nitrure de silicium ne comprend aucun fil de SiC.

8. Article revêtu d'un matériau résistant à l'usure selon la revendication 7 dans lequel la couche adhérente du revêtement de nitrure d'aluminium présente une épaisseur comprise entre 0,1 et 10 µm.

9. Article revêtu d'un matériau résistant à l'usure selon la revendication 7 ou 8 dans lequel la couche adhérente de nitrure d'aluminium a été traitée à chaud après dépôt entre 1100 et 1500 °C environ, et dans lequel l'article présente une diffusion entre le revêtement et le substrat.

## Revendications (Revendications pour l'(les) Etat(s) contractant(s) suivant(s): IT, SE, LI, CH)

1. Article revêtu d'un matériau résistant à l'usure comprenant un corps en substrat à base de nitrure de silicium composite densifié sur lequel est déposée une couche d'un revêtement adhérent réfractaire, caractérisé en ce que la dite couche de revêtement comprend une ou plusieurs couche(s) de nitrure d'aluminium et que le substrat de nitrure de silicium composite comprend des particules, fibres ou fils finement divisés d'un matériau réfractaire dur uniformément distribué dans une matrice de nitrure de silicium densifié.

2. Article revêtu d'un matériau résistant à l'usure selon la revendication 1 dans lequel le matériau réfractaire dur est choisi parmi les carbures et/ou les nitrures et/ou les carbonitrures de titane, de zirconium, d'hafnium, de vanadium, de niobium, de chrome, de molybdène et de tungstène, incluant des combinaisons et des solutions solides de ceux-ci.

3. Article revêtu d'un matériau résistant à l'usure selon la revendication 1 ou 2 dans lequel les particules, fibres ou fils du matériau réfractaire dur sont uniformément distribués dans une matrice d'une première phase de paillettes de nitrure de silicium, et deuxième phase réfractaire de nitrure de silicium et une quantité effective d'un matériau favorisant la densification tel l'yttria, le zircone, l'hafnium, l'alumine, l'oxyde de magnésium et les oxydes de terres rares de lanthanide, et les mélanges de ceux-ci.

4. Article revêtu d'un matériau résistant à l'usure selon l'une quelconque des revendications 1 à 3 dans lequel la taille moyenne des particules du matériau réfractaire dur est comprise entre 0,5 et 20 µm.

5. Article revêtu d'un matériau résistant à l'usure selon l'une quelconque des revendications 1 à 4 dans lequel la quantité du matériau réfractaire dur contenu dans le corps du substrat est comprise entre 15 et 50 % en volume.

6. Article revêtu d'un matériau résistant à l'usure selon la revendication 1 dans lequel la couche du revêtement adhérent de nitrure d'aluminium présente une épaisseur comprise entre 0,1 et 10 µm.

7. Article revêtu d'un matériau résistant à l'usure comprenant un corps en substrat à base de nitrure de silicium monolithique densifié sur lequel est déposée une couche adhérente d'un revêtement réfractaire, caractérisé en ce que la dite couche de revêtement comprend une ou plusieurs couche(s) de nitrure d'aluminium.

8. Article revêtu d'un matériau résistant à l'usure selon la revendication 7 dans lequel la couche adhérente du revêtement de nitrure d'aluminium présente une épaisseur comprise entre 0,1 et 10 µm.

9. Article revêtu d'un matériau résistant à l'usure selon la revendication 7 ou 8 dans lequel la couche adhérente de nitrure d'aluminium a été traitée à chaud après dépôt entre 1100 et 1500 °C environ, et dans lequel l'article présente une diffusion entre le revêtement et le substrat.
